# EUROPÄISCHE PATENTSCHRIFT

(11) **EP 1 423 032 B1**
(45) Veröffentlichungstag und Bekanntmachung des Hinweises auf die Patenterteilung: **23.05.2007**
(21) Anmeldenummer: 02755006.0
(22) Anmeldetag: 23.08.2002
(51) Int. Cl.: A47J 19/02, A47J 43/07

(54) **KÜCHENGERÄT**
KITCHEN DEVICE
APPAREIL DE CUISINE

(30) Priorität: 29.08.2001 DE 10142243
(43) Veröffentlichungstag der Anmeldung: 02.06.2004
(73) Patentinhaber: BSH Bosch und Siemens Hausgeräte GmbH, 81739 München (DE)
(72) Erfinder: AREH, Marko, 2360 Radlje ob Dravi (SI); BREZOVNIK, Peter, 3330 Mozirje (SI); PAVLOVIC, Henrik, Ljubno ob Savin 3333 (SI); STEFFL, Michael, 83250 Marquartstein (DE); ZIBRET, Igor, 3327 Smartno ob Paki (SI)
(86) Internationale Anmeldenummer: PCT/EP2002/009460
(87) Internationale Veröffentlichungsnummer: WO 2003/020090

(56) Entgegenhaltungen:
- EP-A- 0 875 191
- GB-A- 2 082 713
- US-A- 5 035 174

## Beschreibung

Die vorliegende Erfindung bezieht sich auf ein elektrisches Küchengerät, insbesondere Fruchtpresse, mit einer Aufnahme für einen Elektromotor, die im wesentlichen als Hohlzylinder ausgebildet ist und in die der Elektromotor von einer offenen Stirnseite der Aufnahme in diese hineinschiebbar ist, wobei die hohlzylindrische Aufnahme eine Rastnase als ein erstes Haltemittel aufweist, durch das der Elektromotor mit am Elektromotor vorgesehenen Geaenhaltemitteln in axialer Richtung in der Aufnahme festgelegt ist.

Ein derartiges Küchengerät ist bereits aus der EP 0 362 058 B1 bekannt. Dort ist eine Fruchtpresse beschrieben, die einen elektrischen Antriebsmotor aufweist. Der Motor ist innerhalb des Gehäuses gelagert. Über einen Antriebsriemen und Riemenscheiben treibt er eine abtriebsseitige Welle an, auf der die Fruchtpresse gelagert ist.

Aus der EP 875 191 A1 ist ein elektrisches Küchengerät mit einer Aufnahme (Gehäuseankupplung) bekannt, die eine Rastnase als erstes Haltemittel aufweist, die in ein Gegenhaltemittel (Rastnut) am Elektromotor eingreift. Es ist iedoch lediglich eine einzige ringförmig umlaufende Rasnase vorgesehen, die an einer starren Innenwand der Aufnahme (Gehäuseankupplung) umlaufend angeformt ist.

Bei dem aus der US 5,035,174 bekanntem Elektromotor ist dieser nicht mittels Haltemitteln an der hohlzylindrischen Aufnahme, sondern vielmehr auf einer gesonderten Tragplatte befestigt. Die Laschen der Tragplatte können den Elektromotor nicht in axialer Richtung festlegen, sondern können vielmehr in axialer Richtung in den Nuten gleiten.

Schließlich ist bei dem aus der GB 2 082 713 A bekannten Elektromotor der Läufer des Elektromotors in einem Rahmen gelagert, der im Gehäuse befestigt ist, ohne dass Rastnasen vorhanden sind.

Es ist die Aufgabe der Erfindung, ein elektrisches Küchengerät so zu verbessern, dass es einen einfachen und kompakten Aufbau hat.

Erfindungsgemäß wird diese Aufgabe bei einem Küchengerät der eingangs genannten Art dadurch gelöst, dass das erste Haltemittel durch mehrere Rastnasen gebildet wird, die an elastisch federnden Wandsegmenten einer Mantelwand der hohlzylindrischen Aufnahme angeordnet sind.

Dadurch, dass die Aufnahme im Wesentlichen als Hohlzylinder ausgebildet ist und dass der Elektromotor von einer offenen Stirnseite der Aufnahme in diese hineinschiebbar ist, lässt sich der Motor schnell mit den übrigen Teilen des Küchengeräts, insbesondere den Gehäuseteilen, verbinden.

Besonders geeignet ist hierzu eine Mantelwand der Aufnahme, die in in Längsrichtung verlaufende Wandsegmente aufgeteilt ist. Die Wandsegmente weisen auf ihrer Innenseite Haltemittel zur Verbindung mit Gegenhaltemitteln des Elektromotors auf.

In einer geeigneten Weiterbildung weisen die Wandsegmente auf ihrer Innenseite Rastnasen auf, die mit Öffnungen in einer Außenwand des Elektromotors zusammenwirken. Durch Hineinschieben des Elektromotors von der offenen Stirnseite der Aufnahme in diese hinein rasten die Rastnasen an den Wandsegmenten in die Öffnungen in der Außenwand des Elektromotors.

In einer vorteilhaften Ausbildung des Küchengeräts ist zusätzlich dafür Sorge getragen, dass die Winkelposition des Elektromotors bezüglich seiner Längsachse festgelegt ist.

Hierzu dienen an der Aufnahme und an dem Elektromotor angebrachte und einander zugeordnete Mittel zur eindeutigen Festlegung der Lage des Elektromotors in Drehrichtung des Elektromotors. Geeignet ist z. B. eine Raste oder ein Rasthaken oder ein in Längsrichtung verlaufender Vorsprung an der Innenseite der Mantelwand oder an einem der Wandsegmente der Aufnahme, die mit einer entsprechenden Nut in der äußeren Wandung des Elektromotors korrespondiert.

In einer besonders geeigneten Weiterbildung der Erfindung dient die Aufnahme des Elektromotors zusätzlich zur Befestigung einer Leiterplatte in dem Küchengerät. Hierzu weist die Aufnahme Haltemittel zur Verbindung mit Gegenhaltemitteln der Leiterplatte auf. Auf diese Weise wird eine kompakte und einfache Befestigung und Anordnung sowohl für den Motor als auch für die Leiterplatte geschaffen. Gleichzeitig dient die Anordnung als Sicherung gegen Überspannnung.

Vorzugsweise sind auch die Haltemittel für die Leiterplatte auf Wandsegmenten der Aufnahme angeordnet.

Als geeignet erweist sich ein Küchengerät, bei dem die Leiterplatte von der offenen Stirnseite auf die Aufnahme aufgeschoben wird.

Als geeignete und vorteilhafte Ausführungsform ist ein Küchengerät anzusehen, bei dem wenigstens zwei der Wandsegmente der Aufnahme über das stirnseitige Ende der Aufnahme hinausragende Vorsprünge haben, die durch Öffnungen der Leiterplatte hindurchgeschoben werden.

Vorteilhaft dienen zur Vorsprünge mit Schlitzen, in die in die Öffnungen der Leiterplatte hineinragende Rastnasen hineingedrückt werden.

Als Material ist für die Aufnahme besonders ein elastisch federndes Material, insbesondere aus Kunststoff, geeignet.

Weiterhin ist es von besonderem Vorteil, wenn die Leiterplatte eine Öffnung aufweist, durch die der Elektromotor zugänglich ist, durch die insbesondere die elektrischen Anschlüsse des Elektromotors hindurchgeführt werden.

Nachstehend wird die Erfindung in einem Ausführungsbeispiel anhand der Zeichnungen näher erläutert. Diese zeigen:
- Fig. 1: Küchengerät mit einer Aufnahme für einen Elektromotor im Längsschnitt sowie den Elektromotor in der Draufsicht,
- Fig. 2: eine Leiterplatte in der Draufsicht und
- Fig. 3: das Küchengerät nach Fig. 1 in perspektivischer Ansicht^.

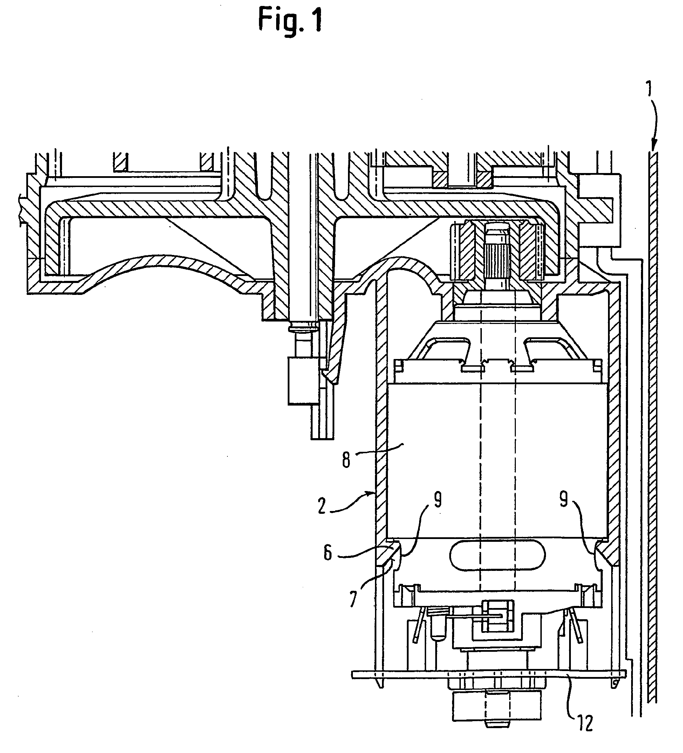

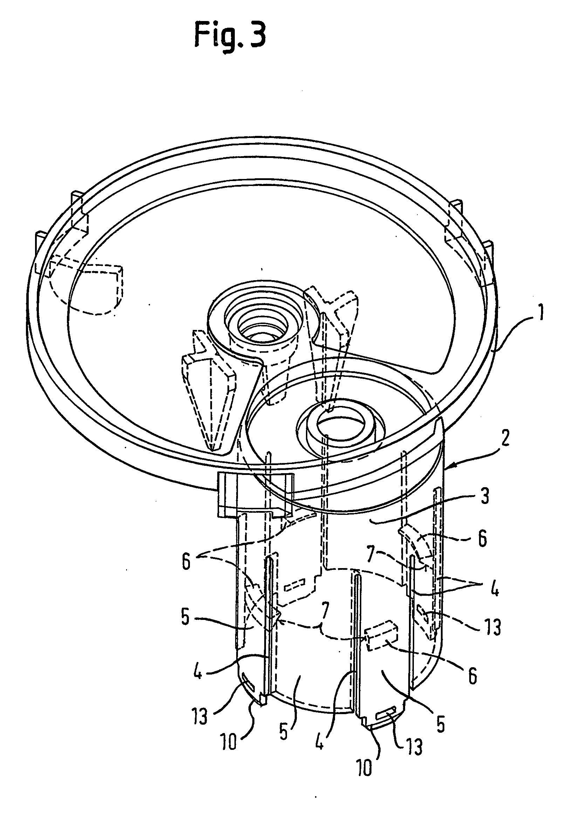

Ein Küchengerät (Fig. 1) weist ein Gehäuse 1 auf, in dem eine Aufnahme 2 angeordnet ist. Die Aufnahme 2 besteht entweder aus Metall oder aus Kunststoff. Die Aufnahme 2 hat die Form eines zu einer unteren Stirnseite hin offenen Hohlzylinders. Von dieser Stirnseite her ist die Aufnahme 2 auf ihrer Mantelwand 3 (Fig. 3) mit Schlitzen 4 versehen, die die Mantelwand 3 in Wandsegmente 5 aufteilen. Die Wandsegmente 5 sind aufgrund der Elastizität des Materials, aus dem die Aufnahme 2 gebildet ist, genügend elastisch, um geringfügig auseinandergedrückt zu werden. Im Wechsel tragen die Wandsegmente 5 nach innen ragende Vorsprünge oder Rastnasen 6. Diese haben in Einfügerichtung eine nach innen gerichtete geneigte Fläche 7, über die ein Elektromotor 8 derart aufgeschoben werden kann, dass die Rastnasen 6 in Öffnungen 9 in einer Außenwand des Elektromotors 8 eingreifen. Dadurch wird der Elektromotor über seinen Umfang beispielsweise durch vier Rastnasen 6 gehalten und ist dadurch sicher arretiert.

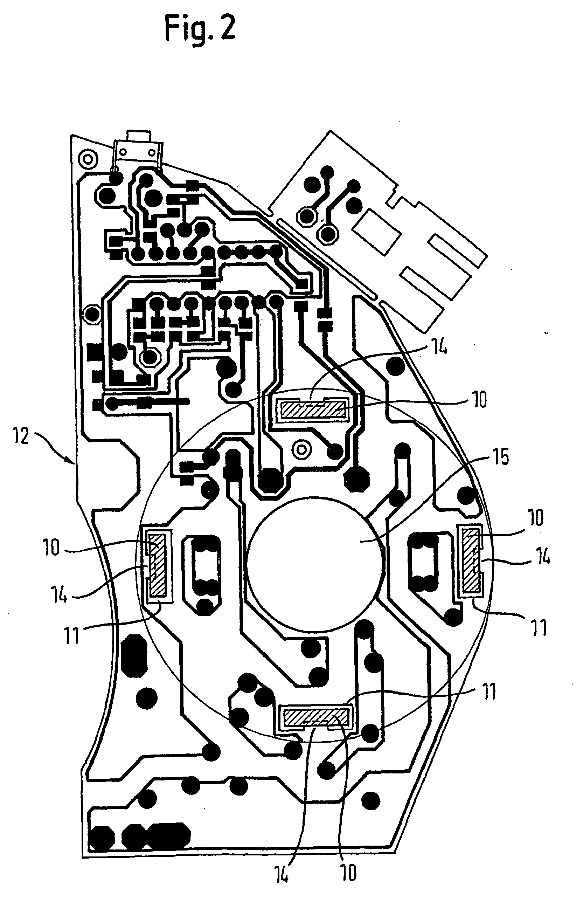

Einige der Wandsegmente 5, tragen in der Nähe der offenen Stirnseite der Aufnahme 2 Vorsprünge 10. Beispielsweise tragen diejenigen der Wandsegmente 5, an denen auch die Rastnasen 6 angeordnet sind, die Vorsprünge 10. Alternativ tragen gerade diejenigen der Wandsegmente 5 die Vorsprünge 10, die keine Rastnasen 6 haben. Die Vorsprünge 10 sind so breit, dass sie durch Öffnungen 11 (Fig. 2) in einer Leiterplatte 12 hineinschiebbar sind. Um zu gewährleisten, dass diese fest mit der Aufnahme verbunden wird und in dieser Position verbleibt, weisen die Vorsprünge 10 Schlitze 13 auf, in die in die Öffnungen 11 hineinragende Befestigungsnasen 14 hineingeschoben werden, wenn die Leiterplatte 12 von unten nach oben auf die Aufnahme 2 aufgedrückt oder aufgeclipst wird.

Die Leiterplatte 12 ist mit einer wenigstens im wesentlichen kreisförmigen Öffnung 15 versehen, durch die der Elektromotor 8 zugänglich ist. Insbesondere werden über die Öffnung 15 die elektrischen Anschlüsse des Elektromotors 8 angeschlossen.

Durch die Erfindung wird eine Aufnahme 2 in einem Küchengerät, insbesondere in einer Fruchtpresse, geschaffen, in der ein Elektromotor 8 und eine Leiterplatte 12 auf einfache Weise gelagert sind. Sie lassen sich leicht in die Aufnahme 2 einbringen, die als Hohlzylinder mit elastisch federnden Wandsegmenten 5 ausgebildet ist.

## Patentansprüche

1. Elektrisches Küchengerät, insbesondere Fruchtpresse, mit einer Aufnahme (2), die im wesentlichen als Hohlzylinder ausgebildet ist und in die ein Elektromotor (8) von einer offenen Stirnseite der Aufnahme (2) in diese hineinschiebbar ist, wobei die hohlzylindrische Aufnahme (2) eine Rastnase (6) als ein erstes Haltemittel aufweist, durch das der Elektromotor (8) mit am Elektromotor (8) vorgesehenen Gegenhaltemitteln in axialer Richtung in der Aufnahme (2) festgelegt ist, **dadurch gekennzeichnet, dass** das erste Haltemittel durch mehrere Rastnasen (6) gebildet wird, die an elastisch federnden Wandsegmenten (5) einer Mantelwand (3) der hohlzylindrischen Aufnahme (2) angeordnet sind.

2. Küchengerät nach Anspruch 1, **dadurch gekennzeichnet, dass** die Mantelwand (3) zur Bildung der elastisch federnden Wandsegmente (5) in axialer Richtung verlaufende Schlitze (4) aufweist.

3. Küchengerät nach einem der Ansprüche 1 oder 2, **dadurch gekennzeichnet, dass** die Wandsegmente (5) auf ihrer Innenseite Rastnasen (6) aufweisen, die mit Öffnungen (9) in einer Außenwand des Elektromotors (8) zusammenwirken.

4. Küchengerät nach einem der Ansprüche 1 bis 3, **dadurch gekennzeichnet, dass** die Aufnahme (2) und der Elektromotor (8) einander zugeordnete Mittel zur eindeutigen Festlegung der Lage des Elektromotors (8) in Drehrichtung des Elektromotors (8) aufweisen.

5. Küchengerät nach Anspruch 4, **dadurch gekennzeichnet, dass** das Mittel ein in Längsrichtung verlaufender Vorsprung an der Innenseite der Aufnahme (2) ist, der in eine korrespondierende Nut am Elektromotor (8) eingreift.

6. Küchengerät nach einem der Ansprüche 1 bis 5, **dadurch gekennzeichnet, dass** die Aufnahme (2) zweite Haltemittel für eine Leiterplatte (12) aufweist.

7. Küchengerät nach Anspruch 6, **dadurch gekennzeichnet, dass** die zweiten Haltemittel an den Wandsegmenten (5) der Aufnahme (2) angeordnet sind.

8. Küchengerät nach Anspruch 7, **dadurch gekennzeichnet, dass** zur Bildung der zweiten Haltemittel die Wandsegmente (5) an der offenen Stirnseite der Aufnahme (2) in axialer Richtung hinausragende Vorsprünge (10) aufweisen.

9. Küchengerät nach Anspruch 8, **dadurch gekennzeichnet, dass** die Vorsprünge (10) Schlitze (13) aufweisen, in die an der Leiterplatte (12) vorgesehene Befestigungsnasen (14) eingreifen.

10. Küchengerät nach Anspruch 9, **dadurch gekennzeichnet, dass** die Befestigungsnasen (14) in Öffnungen (11) der Leiterplatte (12) hineinragen, in welche die Vorsprünge (10) von wenigstens zwei Wandsegmenten (5) der Aufnahme (2) einsteckbar sind.

## Claims

1. Electric kitchen appliance, particularly fruit press, with a receptacle (2), which is constructed substantially as a hollow cylinder and into which an electric motor (8) can be pushed from an open end face of the receptacle (2) into this, wherein the hollow cylindrical receptacle (2) has a detent lug (6) as a first holding means, by which the electric motor (8) is fixed in the receptacle (2) in axial direction by counter-holding means provided at the electric motor (8), **characterised in that** the first holding means is formed by several detent lugs (6) which are arranged at elastically resilient wall segments (5) of a casing wall (3) of the hollow cylindrical receptacle (2).

2. Kitchen appliance according to claim 1, **characterised in that** the casing wall (3) has slots (4) extending in axial direction for formation of the elastically resilient wall segments (5).

3. Kitchen appliance according to one of claims 1 and 2, **characterised in that** the wall segments (5) have on the inner side thereof detent lugs (6) which co-operate with openings (9) in an outer wall of the electric motor (8).

4. Kitchen appliance according to one of claims 1 to 3, **characterised in that** the mount (2) and the electric motor (8) have mutually associated means for unique fixing of the position of the electric motor (8) in rotational direction of the electric motor (8).

5. Kitchen appliance according to claim 4, **characterised in that** the means is a projection, which extends in longitudinal direction and engages in a corresponding groove at the electric motor (8), at the inner side of the receptacle (2).

6. Kitchen appliance according to one of claims 1 to 5, **characterised in that** the receptacle (2) has second holding means for a circuitboard (12).

7. Kitchen appliance according to claim 6, **characterised in that** the second holding means are arranged at the wall segments (5) of the receptacle (2).

8. Kitchen appliance according to claim 7, **characterised in that** for formation of the second holding means the wall segments (5) have, at the open end face of the receptacle (2), projections (10) protruding in axial direction.

9. Kitchen appliance according to claim 8, **characterised in that** the projections (10) have slots (13) in which fastening lugs (14) provided at the circuitboard (12) engage.

10. Kitchen appliance according to claim 9, **characterised in that** the fastening lugs (14) protrude into openings (11) of the circuitboard (12), into which the projections (10) of at least two wall segments (5) of the receptacle (2) can be plugged.

## Revendications

1. Appareil de cuisine électrique, en particulier presse-fruits, comprenant un logement (2), qui est conçu sensiblement comme un cylindre creux et dans lequel un moteur électrique (8) peut être introduit à partir d'un côté avant ouvert du logement (2) dans celui-ci, le logement (2) cylindrique creux présentant un ergot d'encliquetage (6) comme un premier moyen de retenue, par lequel le moteur électrique (8) est fixé avec des contre-moyens de retenue prévus sur le moteur électrique (8) dans le sens axial dans le logement (2), **caractérisé en ce que** le premier moyen de retenue est formé de plusieurs ergots d'encliquetage (6), qui sont disposés sur des segments de paroi (5) faisant ressort élastiquement d'une paroi d'enveloppe (3) du logement (2) cylindrique creux.

2. Appareil de cuisine selon la revendication 1, **caractérisé en ce que** la paroi d'enveloppe (3) présente des fentes (4) agencées dans le sens axial pour former les segments de paroi (5) faisant ressort élastiquement.

3. Appareil de cuisine selon l'une quelconque des revendications 1 ou 2, **caractérisé en ce que** les segments de paroi (5) présentent sur leur côté intérieur des ergots d'encliquetage (6) qui coopèrent avec des ouvertures (9) dans une paroi extérieure du moteur électrique (8).

4. Appareil de cuisine selon l'une quelconque des revendications 1 à 3, **caractérisé en ce que** le logement (2) et le moteur électrique (8) présentent des moyens attribués réciproquement pour la fixation claire de la position du moteur électrique (8) dans le sens de rotation du moteur électrique (8).

5. Appareil de cuisine selon la revendication 4, **caractérisé en ce que** le moyen est une saillie agencée dans le sens longitudinal, sur le côté intérieur du logement (2), qui s'engage dans une rainure correspondante sur le moteur électrique (8).

6. Appareil de cuisine selon l'une quelconque des revendications 1 à 5, **caractérisé en ce que** le logement (2) présente deux seconds moyens de retenue pour une carte imprimée (12).

7. Appareil de cuisine selon la revendication 6, **caractérisé en ce que** les seconds moyens de retenue sont disposés sur les segments de paroi (5) du logement (2).

8. Appareil de cuisine selon la revendication 7, **caractérisé en ce que**, pour former les seconds moyens de retenue, les segments de paroi (5) présentent sur le côté avant ouvert du logement (2) des saillies (10) dépassant dans le sens axial.

9. Appareil de cuisine selon la revendication 8, **caractérisé en ce que** les saillies (10) présentent des fentes (13) dans lesquelles s'engagent des ergots de fixation (14) prévus sur la carte imprimée (12).

10. Appareil de cuisine selon la revendication 9, **caractérisé en ce que** les ergots de fixation (14) dépassent dans des ouvertures (11) de la carte imprimée (12), dans lesquelles les saillies (10) d'au moins deux segments de paroi (5) du logement (2) peuvent être emboîtées.
